# EUROPÄISCHE PATENTANMELDUNG

(11) **EP 2 814 275 A1**
(43) Veröffentlichungstag der Anmeldung: **17.12.2014**
(21) Anmeldenummer: 14171517.7
(22) Anmeldetag: 06.06.2014
(51) Int. Cl.: H04W 12/06, H04W 88/10, H04W 4/00

(54) **Telekommunikationsanordnung und Verfahren für die Mobilkommunikation**

(30) Priorität: 10.06.2013 DE 102013210777
(71) Anmelder: Teles AG Informationstechnologien, 10587 Berlin (DE)
(72) Erfinder: Paetsch, Frank, 12357 Berlin (DE)
(74) Vertreter: Müller, Wolfram Hubertus

(57) **Zusammenfassung**

Die Erfindung betrifft eine Telekommunikationsanordnung, die eine Mehrzahl von Telekommunikations (TK)-Endgeräten (21-23), die jeweils eine physische SIM-Karte (210-230) aufweisen, die SIM-Identifizierungsdaten enthält, und ein Mobilfunkmodul (30) für eine Mobilkommunikation aufweist. Es ist vorgesehen, dass das Mobilfunkmodul (30) dazu ausgebildet ist, SIM-Identifizierungsdaten der SIM-Karten (210-230) der Mehrzahl der TK-Endgeräte (21-23) zu erhalten und jeweils zum Aufbau einer Mobilkommunikationsverbindung zu nutzen, wobei durch das Bereitstellen der SIM-Identifizierungsdaten einer SIM-Karte (210-230) jeweils eine Nutzung des Mobilfunkmoduls (30) für die Mobilkommunikation ermöglicht wird. Weiter ist vorgesehen, dass nach Aufbau einer Mobilkommunikationsverbindung Nutzdaten von/zu dem TK-Endgerät (21-23), das die SIM-Identifizierungsdaten für die Mobilkommunikationsverbindung bereitgestellt hat, übertragen werden, wozu das TK-Endgerät (21-23) über eine lokale Datenverbindung (40) mit dem Mobilfunkmodul (30) kommuniziert. Die Erfindung betrifft des Weiteren ein Fahrzeug mit einer solchen Telekommunikationsanordnung und ein Verfahren für die Mobilfunkkommunikation.

## Beschreibung

Die Erfindung betrifft eine Telekommunikationsanordnung und ein Verfahren für die Mobilkommunikation, insbesondere für den Betrieb einer solchen Telekommunikationsanordnung.

### Hintergrund der Erfindung

Eine SIM-Karte ist eine Einsteckkarte für ein Telekommunikations (TK)-Endgerät, die eine Kennung (IMSI = International Mobile Subscriber Identity) enthält, die einen Netzteilnehmer eindeutig identifiziert und über die ein Mobilfunkgerät einem bestimmten Netzbetreiber zugeordnet wird und eine bestimmte Rufnummer erhält. Darüber hinaus weist eine SIM-Karte als weitere Identifizierungsdaten eine PIN-Nummer (PIN - Personal Identity Number), sicherheitsrelevante Daten wie Kommunikationsschlüssel und Sicherheitsalgorithmen, und ggf. nutzerspezifische Daten sowie netzspezifische Daten auf. Die auf einer SIM-Karte enthaltenen Daten, insbesondere IMSI und PIN-Nummer, werden als SIM-Identifizierungsdaten bezeichnet. Die SIM-Identifizierungsdaten personalisieren ein Mobilfunk-Endgerät hinsichtlich des Nutzers und hinsichtlich des Netzbetreibers und ermöglichen die Abrechnung von Gesprächsgebühren von dem Netzbetreiber.

Der Erfindung liegt die Aufgabe zugrunde, TK-Endgeräte, die jeweils eine SIM-Karte aufweisen, in effektiver Weise für eine Mobilkommunikation einzusetzen.

### Zusammenfassung der Erfindung

Diese Aufgabe wird erfindungsgemäß durch eine Telekommunikationsanordnung mit den Merkmalen des Anspruchs 1, ein Fahrzeug mit den Merkmalen des Anspruchs 14 und ein Verfahren mit den Merkmalen des Anspruchs 15 gelöst. Ausgestaltungen der Erfindungen sind in den Unteransprüchen angegeben.

Danach sieht die erfindungsgemäße Lösung eine Telekommunikationsanordnung mit einer Mehrzahl von TK-Endgeräten vor, die jeweils eine physische SIM-Karte aufweisen, die SIM-Identifizierungsdaten enthält. Des weiteren umfasst die Telekommunikationsanordnung ein Mobilfunkmodul für eine Mobilkommunikation. Das Mobilfunkmodul ist dazu ausgebildet, SIM-Identifizierungsdaten der SIM-Karten der Mehrzahl der TK-Endgeräte zu erhalten und jeweils zum Aufbau einer Mobilkommunikationsverbindung zu nutzen, wobei durch das Bereitstellen der SIM-Identifizierungsdaten einer SIM-Karte jeweils eine Nutzung des Mobilfunkmoduls für die Mobilkommunikation ermöglicht wird. Weiter ist vorgesehen, dass nach Aufbau einer Mobilkommunikationsverbindung Nutzdaten von/zu dem TK-Endgerät, das die SIM-Identifizierungsdaten für die Mobilkommunikationsverbindung bereitgestellt hat, übertragen werden, wozu das TK-Endgerät über eine lokale Datenverbindung mit dem Mobilfunkmodul kommuniziert. Bei der lokalen Datenverbindung handelt es sich beispielsweise um ein lokales drahtgebundenes oder drahtloses Netz oder einzelne Leitungen.

Dabei kann weiter vorgesehen sein, dass die Nutzdaten, die nach Aufbau der Mobilkommunikationsverbindung vom TK-Endgerät, das die SIM-Identifizierungsdaten für die Mobilkommunikationsverbindung bereitgestellt hat, zum Mobilfunkmodul übertragen werden, durch ein in das TK-Endgerät integriertes Kommunikationsmodul bereitgestellt werden, das Nutzdaten erfasst oder generiert.

Die Erfindung beruht auf der Idee, nur ein Funkmodul in Verbindung mit einer Mehrzahl von SIM-Karten unterschiedlicher TK-Endgeräte einzusetzen, wobei das Funkmodul die unterschiedlichen SIM-Karten mit Hilfe der übersandten SIM-Identifizierungsdaten jeweils in einem Kommunikationsnetz einbuchen und zum Aufbau einer Mobilfunkverbindung nutzen kann.

Die erfindungsgemäße Lösung ermöglicht es, mit nur einem Mobilfunkmodul mehrere Dienste abzubilden, die über unterschiedliche SIM-Karten realisiert werden. Die erfindungsgemäße Lehre ist dabei mit mehreren Vorteilen verbunden. Ein erster Vorteil besteht in einer Kostenreduzierung insofern, als nicht für jeden Dienst bzw. jede SIM-Karte ein eigenes Mobilfunkmodul eingesetzt werden muss. Ein zweiter Vorteil besteht in einer einfacheren Verkabelung und Antennengestaltung. So muss bei Funktechnologien jedes Modul eine eigene Antenne besitzen. Bei z.B. vier über Funk abgebildeten Diensten sind damit herkömmlich vier Antennen erforderlich. Durch die erfindungsgemäße Realisierung unterschiedlicher Dienste mit nur einem Mobilfunkmodul können die Zahl der Antennen reduziert und die Antennengestaltung erheblich vereinfacht werden.

Es wird darauf hingewiesen, dass der Begriff "SIM-Karte" im Sinne der vorliegenden Erfindung jede Einsteckkarte bezeichnet, die einen Netzteilnehmer eindeutig identifiziert, so dass ein Mobilfunkgerät mit einer solchen Einsteckkarte einem bestimmten Netzbetreiber zugeordnet werden und eine bestimmte Rufnummer erhalten kann. Der Begriff "SIM-Karte" bezeichnet somit nicht nur Einsteckkarten zur Identifikation eines Teilnehmers im GSM-Standard, sondern auch Einsteckkarten zur Identifikation eines Netzteilnehmers beliebiger anderer derzeitiger oder zukünftiger Mobilfunk-Standards.

Gemäß einer Ausgestaltung ist die erfindungsgemäße Telekommunikationsanordnung in einem Fahrzeug realisiert, wobei die Mehrzahl der TK-Endgeräte in einem Fahrzeug angeordnet oder anordbar und das Mobilfunkmodul in dem Fahrzeug installiert ist. Ein Fahrzeug im Sinne der vorliegenden Erfindung ist dabei jedes Vehikel, dass eine oder mehrere Personen befördern kann. Insbesondere fallen darunter Kraftfahrzeuge, Schienenfahrzeuge und Flugzeuge.

Die Anordnung der Telekommunikationsanordnung in einem Fahrzeug stellt jedoch nur ein Ausführungsbeispiel der Erfindung dar, für die zahlreiche Anwendungsmöglichkeiten existieren. Eine weitere beispielhafte Anwendungsmöglichkeit besteht darin, dass die Mehrzahl von TK-Endgeräten in einem geografischen Bereich angeordnet ist, in dem für die TK-Endgeräte keine durchgehende Verfügbarkeit eines Mobilfunknetzes vorliegt. Dabei erfolgt eine Mobilkommunikation über das Mobilfunkmodul, bei dem eine solche Verfügbarkeit vorliegt. Dabei handelt es sich bei dem geografischen Bereich beispielsweise um ein Kellergeschoss eines Gebäudes oder einer Industrieanlage, in dem kein Mobilfunkempfang besteht. Die einzelnen TK-Endgeräte kommunizieren beispielsweise über ein lokales Netz mit dem Mobilfunkmodul, bei dem allein eine sichere Verfügbarkeit eines Mobilfunknetzes vorliegt, etwa weil es eine geeignet platzierte Antenne aufweist oder mit einer solchen verbunden ist.

Die erfindungsgemäße Lösung kann in einfacher Weise realisiert werden. So ist es z.B. im Fahrzeugbau zunehmend verbreitet, Datenkommunikationspfade beispielsweise in Form lokaler Datenbusse in ein Fahrzeug zu integrieren. Solche Datenkommunikationspfade können für eine Kommunikation zwischen den TK-Endgeräten und dem Mobilfunkmodul der erfindungsgemäßen Telekommunikationseinrichtung genutzt werden.

Darüber hinaus kann durch Verwendung einer Drahtloskommunikation der Datenpfad alternativ komplett ohne Verkabelung realisiert werden. Bei Verwendung einer Drahtloskommunikation ist es auch möglich, Lösungen bereitzustellen, die unabhängig z.B. vom Fahrzeugbau des Fahrzeugherstellers realisierbar sind. Es ist lediglich ein Funkmodul mit integrierter Antenne am Fahrzeug zu befestigen (mit einer geeigneten Stromversorgung) und es sind TK-Endgeräte, die die SIM-Identifizierungsdaten der jeweiligen SIM-Karte auslesen und die Daten an das Mobilfunkmodul weiterleiten, bereitzustellen. Gemäß dieser Variante können auch alte Fahrzeuge ohne die Notwendigkeit einer Neuverkabelung mit der erfindungsgemäßen Telekommunikationsanordnung nachgerüstet werden.

In einer Ausgestaltung der Erfindung umfasst die Telekommunikationsanordnung des Weiteren eine Steuereinheit, die dazu ausgebildet festzulegen, zu welcher der SIM-Karten der Telekommunikationsanordnung das Mobilfunkmodul zu einem betrachteten Zeitpunkt eine Mobilkommunikationsverbindung aufbaut oder aufrecht erhält. Die Steuereinheit ist beispielsweise dazu ausgebildet ist, automatisch anhand vorbestimmter Parameter festzulegen, welche der SIM-Karten aktuell für eine Mobilfunkkommunikation beim Mobilfunkmodul eingebucht wird. Solche Parameter sind beispielsweise Ort, Zeit und/oder mindestens ein Betriebsmodus eines Fahrzeugs. Alternativ kann vorgesehen sein, dass ein Nutzer manuell festlegen kann, welche der SIM-Karten der TK-Endgeräte aktuell für eine Mobilfunkkommunikation beim Mobilfunkmodul eingebucht wird.

Gemäß einer weiteren Ausgestaltung der Erfindung werden die SIM-Identifizierungsdaten der SIM-Karten zunächst an die Steuereinheit übertragen und überträgt die Steuereinheit die SIM-Identifizierungsdaten einer der SIM-Karten dann an das Mobilfunkmodul zwecks Aufbau einer Mobilkommunikationsverbindung. Die Steuereinheit stellt dabei eine Art Mittelsperson zwischen den TK-Endgeräten und Mobilfunkmodul dar.

Alternativ ist vorgesehen, dass die SIM-Identifizierungsdaten der SIM-Karten direkt an das Mobilfunkmodul übertragen werden und die Steuereinheit ein Steuersignal an das Mobilfunkmodul überträgt, mit welcher der SIM-Identifizierungsdaten das Mobilfunkmodul eine Mobilkommunikationsverbindung aufbauen soll.

In beiden Fällen kann vorgesehen sein, dass die Steuereinheit und das Mobilfunkmodul in ein Gerät integriert sind.

Gemäß einer Ausgestaltung der Erfindung werden die SIM-Identifizierungsdaten an die Steuereinheit und/oder an das Mobilfunkmodul über eine lokale Datenverbindung übertragen. Beispielsweise werden die SIM-Identifizierungsdaten drahtlos an die Steuereinheit und/oder das Mobilfunkmodul übertragen. Auch kann vorgesehen sein, dass die TK-Endgeräte, die Steuereinheit und das Mobilfunkmodul an ein lokales (drahtloses oder verdrahtetes) Netz z.B. eines Fahrzeugs angeschlossen sind.

Gemäß einer Ausgestaltung der Erfindung ist mindestens eine der SIM-Karten physisch fest in einem Fahrzeug oder in einem Gebäude installiert.

Gemäß einer Ausgestaltung der Erfindung ist mindestens eines der TK-Endgeräte dazu ausgebildet, nach Aufbau einer Mobilkommunikationsverbindung von einem Sensor erhaltene Daten über die Mobilkommunikationsverbindung zu übertragen, wobei der Sensor Teil des TK-Gerätes sein kann. Ein solcher Sensor ist beispielsweise ein CrashSensor oder ein Sensor, der fortlaufend Betriebsparameter eines Fahrzeugs aufzeichnet.

Gemäß einer Ausgestaltung der Erfindung stellt mindestens eines der TK-Endgeräte einen Telefonie-Dienst und/oder einen Datendienst bereitstellt.

Gemäß einer Ausgestaltung der Erfindung ist mindestens eine der SIM-Karten eine "Notruf-SIM-Karte", mit deren SIM-Identifizierungsdaten im Falle eines Unfalls eines Fahrzeugs eine Mobilfunkverbindung automatisch aufgebaut wird.

Gemäß einer Ausgestaltung der Erfindung ist mindestens eine der SIM-Karten eine "Wartungs-SIM-Karte", mit deren SIM-Identifizierungsdaten während oder nach Beendigung eines Fahrbetriebs eine Mobilfunkverbindung automatisch aufgebaut wird.

Gemäß einer Ausgestaltung der Erfindung ist mindestens eine der SIM-Karten eine SIM-Karte eines Autotelefons, mit deren SIM-Identifizierungsdaten eine Mobilfunkverbindung aufgebaut wird, wenn ein Fahrzeuginsasse über das Autotelefon einen Telefondienst oder einen Datendienst nutzen will.

Das Mobilfunkmodul kann derart ausgebildet sein, dass zu einem betrachteten Zeitpunkt nur ein Mobilfunkkanal aufgebaut werden kann. Die SIM-Karten und die durch diese bereitgestellten Dienste werden dementsprechend hintereinander genutzt. Dies ist unproblematisch, da die einzelnen Dienste in der Regel nicht gleichzeitig zum Einsatz kommen. Trotzdem kann alternativ vorgesehen sein, dass das Mobilfunkmodul dazu ausgebildet ist, auf der Basis der SIM-Identifizierungsdaten mehrerer SIM-Karten gleichzeitig mehrere Mobilkommunikationsverbindungen aufzubauen. Die SIM-Karten und die durch diese bereitgestellten Dienste werden bei dieser Ausführungsvariante dementsprechend parallel genutzt. So existieren Mobilfunkmodule, die mehrere SIM-Karten parallel bedienen können. Die genannte Ausgestaltung der Erfindung ermöglicht, dass mehrere lokale SIM-Karten über solch ein Mobilfunkmodul parallel registriert werden und arbeiten können.

Gemäß einer Ausgestaltung der Erfindung weist die erfindungsgemäße Telekommunikationsanordnung nur genau ein in einem Fahrzeug oder in einem bestimmten geografischen Gebiet installiertes Mobilfunkmodul für eine Mobilkommunikation auf. Dieses Mobilfunkmodul enthält bevorzugt physisch keine SIM-Karte, sondern benötigt jeweils die SIM-Identifizierungsdaten der SIM-Karten der TK-Endgeräte, um eine Mobilfunkverbindung aufbauen zu können. Alternativ können im Fahrzeug oder im betrachteten geografischen Gebiet jedoch auch mehrere Mobilfunkmodule vorgesehen sein, denen dann jeweils eine Mehrzahl von SIM-Karten zugeordnet sind.

Die Erfindung betrifft des Weiteren ein Verfahren für die Mobilfunkkommunikation, insbesondere für den Betrieb einer Telekommunikationsanordnung nach Anspruch 1. Das Verfahren umfasst die Schritte:
- Bereitstellen von mindestens zwei TK-Endgeräten, die jeweils eine physische SIM-Karte besitzen, die SIM-Identifizierungsdaten enthält,
- Bereitstellen eines zentralen Mobilfunkmoduls für die Mobilkommunikation,
- Übertragen von ersten SIM-Identifizierungsdaten einer ersten der SIM-Karten an das Mobilfunkmodul und Aufbau einer Mobilkommunikationsverbindung unter Verwendung der ersten SIM-Identifizierungsdaten, wobei nach Aufbau der Mobilkommunikationsverbindung Nutzdaten zwischen dem Mobilfunkmodul und dem TK-Endgerät, das die erste SIM-Karte besitzt, über eine lokale Datenverbindung übertragen werden; und
- Übertragen von zweiten SIM-Identifizierungsdaten einer zweiten der SIM-Karten an das Mobilfunkmodul und Aufbau einer Mobilkommunikationsverbindung unter Verwendung der zweiten SIM-Identifizierungsdaten, wobei nach Aufbau der Mobilkommunikationsverbindung Nutzdaten zwischen dem Mobilfunkmodul (30) und dem TK-Endgerät (21-23), das die zweite SIM-Karte besitzt, über eine lokale Datenverbindung (40) übertragen werden.

Gemäß einer Ausgestaltung des Verfahrens legt dabei eine Steuereinheit fest, welche der SIM-Karten aktuell für eine Mobilfunkkommunikation beim Mobilfunkmodul eingebucht wird.

Gemäß einer weiteren Ausgestaltung des Verfahrens werden die erste und die zweite SIM-Karte und die durch diese bereitgestellten Dienste hintereinander genutzt, so dass das Übertragen von zweiten SIM-Identifizierungsdaten einer zweiten der SIM-Karten an das Mobilfunkmodul und der Aufbau einer Mobilkommunikationsverbindung unter Verwendung der zweiten SIM-Identifizierungsdaten erfolgt, nachdem die Mobilkommunikationsverbindung beendet wurde, die unter Verwendung der ersten SIM-Identifizierungsdaten einer ersten der SIM-Karten aufgebaut wurde. Alternativ kann vorgesehen sein, dass auf der Basis der SIM-Identifizierungsdaten der ersten und der zweiten sowie ggf. weiterer SIM-Karten gleichzeitig mehrere Mobilkommunikationsverbindungen aufgebaut werden.

### Beschreibung von Ausführungsbeispielen

Die Erfindung wird nachfolgend unter Bezugnahme auf die Figuren der Zeichnung anhand mehrerer Ausführungsbeispiele näher erläutert. Es zeigen:
- Fig. 1: ein Ausführungsbeispiel einer in ein Kraftfahrzeug integrierten Telekommunikationsanordnung;
- Fig. 2: eine erste Ausführungsvariante der Anordnung mehrerer TK-Endgeräte, eines Steuergerätes und eines Mobilfunkmoduls einer Telekommunikationsanordnung;
- Fig. 3: ein zweite Ausführungsvariante der Anordnung mehrerer TK-Endgeräte, eines Steuergerätes und eines Mobilfunkmoduls einer Telekommunikationsanordnung; und
- Fig. 4: eine Abfolge von Verfahrensschritten zum Aufbau von Mobilfunkverbindungen gemäß einem Ausführungsbeispiel der Erfindung.

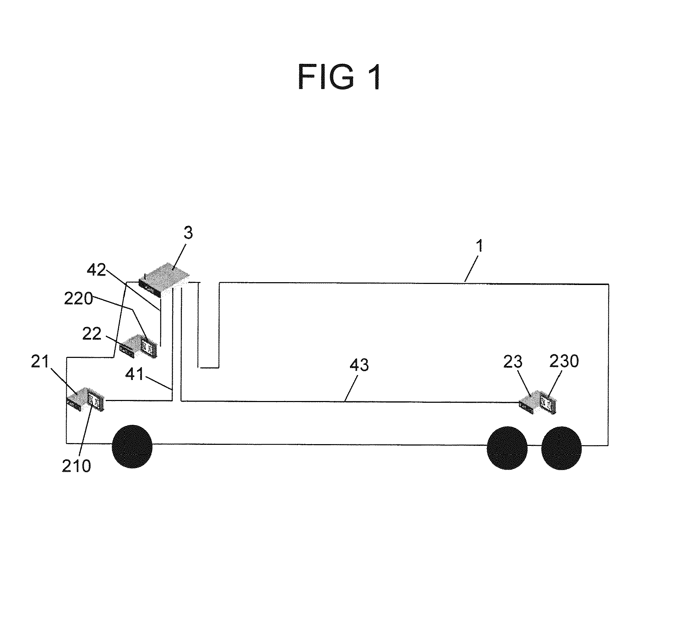

Die Figur 1 zeigt schematisch eine Telekommunikationsanordnung, die in einem Kraftfahrzeug 1 angeordnet ist. Die Telekommunikationsanordnung umfasst eine Mehrzahl von Telekommunikationsendgeräten (TK-Endgeräten) 21, 22, 23 sowie ein Mobilfunkgerät 3.

Die TK-Endgeräte 21-23 umfassen jeweils physisch eine SIM-Karte 210, 220, 230. Die SIM-Karten 210-230 weisen jeweils SIM-Identifizierungsinformationen auf, insbesondere IMSI und PIN-Nummer, und ermöglichen eine Nutzung eines Mobilfunkmoduls für die Mobilkommunikation in Verbindung mit dem Mobilfunkgerät 3, wie noch erläutert werden wird.

Die TK-Endgeräte 21-23 weisen neben den SIM-Karten 210-230 jeweils einen Kartenleser auf, der es erlaubt, die auf den jeweiligen SIM-Karten 210-230 enthaltenen SIM-Identifizierungsinformationen auszulesen und über eine Datenverbindung wie z.B. Ethernet oder WiFi an das Mobilfunkgerät 3 zu übertragen.

Des Weiteren weisen die TK-Endgeräte 21-23 ein nicht explizit dargestelltes Kommunikationsmodul auf, das Daten erfasst oder generiert und diese Daten an das Mobilfunkgerät 3 überträgt. Bei diesen Daten handelt es sich beispielsweise um die Daten eines Sensors, der während des Fahrzeugbetriebs Betriebsparameter erfasst und diese während des Fahrbetriebs oder danach an das Mobilfunkgerät 3 überträgt. Gemäß einem weiteren Ausführungsbeispiel umfasst das Kommunikationsmodul einen Sensor, der bei einem Unfall, beispielsweise bei Auslösen eines Airbags, entsprechende Informationen automatisch an das Mobilfunkgerät 3 sendet.

Jedoch kann das genannte Kommunikationsmodul auch die Kommunikationseinheit eines in das Fahrzeug eingebauten Autotelefons sein, die Sprachinformationen des Fahrers oder einer anderen Person im Fahrzeug erfasst und diese Daten an das Mobilfunkgerät 3 überträgt bzw. empfangene Daten vom Mobilfunkgerät 3 erhält und mittels eines Lautsprechers wiedergibt. Das Kommunikationsmodul stellt ein Endsystem einer Kommunikationsverbindung dar, dass Daten überträgt und/oder erhält.

Das Mobilfunkgerät 3 umfasst ein Mobilfunkmodul für die Mobilfunkkommunikation. Dabei ist bevorzugt vorgesehen, dass das Mobilfunkgerät nur ein einziges solches Mobilfunkmodul aufweist. Das Mobilfunkmodul ist dazu ausgebildet und vorgesehen, zusammen mit den Identifizierungsdaten einer SIM-Karte einen Mobilfunkkanal für eine Mobilfunkkommunikation aufzubauen und hierüber eine Datenübertragung vorzunehmen.

Das Mobilfunkmodul ist somit dafür vorgesehen, unter Verwendung von SIM-Identifizierungsdaten eine Mobilfunkverbindung aufzubauen, Daten auf den aufgebauten Mobilfunkkanal zu geben und über den aufgebauten Mobilfunkkanal Daten zu empfangen, sowie in Bezug auf die Nutzdaten, die auf den aufgebauten Mobilfunkkanal gegeben oder auf diesem empfangen werden, mit dem jeweils involvierten TK-Endgerät zu kommunizieren, das der Erzeuger oder Empfänger der Nutzdaten ist.

Dabei ist zu beachten, dass eine SIM-Karte, nämlich deren SIM-Identifizierungsinformationen einen Netzteilnehmer eindeutig identifizieren und ein Mobilfunkgerät einem bestimmten Netzbetreiber zuordnen. Jede der SIM-Karten 210, 220, 230 identifiziert somit eindeutig das jeweilige TK-Endgerät 21, 22, 23 und ordnet dieses einem bestimmten Mobilfunk-Netzbetreiber zu.

Das Mobilfunkendgerät 3 umfasst neben dem Mobilfunkmodul eine Antenne, die in das Mobilfunkmodul integriert sein kann.

Die TK-Endgeräte 21-23 sind im dargestellten Ausführungsbeispiel jeweils über eine TK-Leitung 41, 42, 43 mit dem Mobilfunkgerät 3 verbunden. Die TK-Leitungen 41, 42, 43 sind beispielsweise Bestandteil der Verkabelung eines in das Kraftfahrzeug 1 integrierten Datenbusses, beispielsweise eines CAN-Busses. Eine Datenübertragung über die TK-Leitungen 41 erfolgt beispielsweise mittels des Ethernet-Protokolls.

Alternativ kann vorgesehen sein, dass eine Kommunikation zwischen den TK-Endgeräten 21-23 und dem Mobilfunkgerät 3 über eine Drahtlosverbindung, beispielsweise mittels des Standards WiFi erfolgt. Dies stellt sogar insofern eine bevorzugte Ausgestaltung der beschriebenen Telekommunikationsanordnung dar, als mittels einer drahtlosen Realisierung der Kommunikation zwischen den einzelnen Komponenten der Telekommunikationsanordnung es möglich ist, alte Fahrzeuge ohne eine Neuverkabelung mit der beschriebenen Telekommunikationsanordnung nachzurüsten.

Der beschriebenen Telekommunikationsanordnung liegt der Gedanke zugrunde, dass nur ein Mobilfunkmodul für den Aufbau von Mobilfunkverbindungen der verschiedenen TK-Endgeräte 21-23 eingesetzt wird. Für jeden Verbindungsaufbau liest der Kartenleser des TK-Endgerätes 21-23 die SIM-Identifizierungsdaten aus und überträgt diese an das im Mobilfunkgerät 3 angeordnete Funkmodul, das unter Verwendung der erhaltenen SIM-Identifizierungsdaten einen Mobilfunkkanal aufbaut.

Es wird dementsprechend ein zentrales Mobilfunkmodul bereitgestellt, das mit mehreren, an unterschiedlichen Orten physisch im Kraftfahrzeug angeordneten SIM-Karten angesprochen werden kann. Eine solche TK-Anordnung kann z.B. in Fahrzeugen eingesetzt werden, die mehrere Dienstanbieter - repräsentiert durch die jeweilige SIM-Karte - zum Zugang zu Mobilfunknetzen benötigen. So können unterschiedliche Dienste, wie z.B. ein Dienst "Notruf" im Falle eines Unfalls, ein Dienst "Wartung" während des Betriebs des Fahrzeugs oder danach, und ein Dienst "Telefonie" über nur ein zentrales Mobilfunkmodul, nämlich das Modulfunkmodul des Mobilfunkgerätes 3, abgebildet werden, obwohl diese Dienste jeweils durch eine eigene SIM-Karte abgebildet werden. Dabei können die SIM-Karten physisch an unterschiedlichen Stellen im Kraftfahrzeug angeordnet sein.

Beispielsweise befindet sich eine SIM-Karte für einen Notruf im Motorraum, befindet sich eine SIM-Karte für Telefonie im Fahrgastraum und befindet sich mindestens eine SIM-Karte für Wartungsinformationen am Motor und/oder an den Fahrzeugachsen und/oder ebenfalls im Fahrgastraum. Für jede dieser SIM-Karten wird im Falle einer Datenübertragung ein Mobilfunkkanal über das Mobilfunkgerät 3 aufgebaut, wobei wie erläutert die Datenverbindung zwischen den TK-Endgeräten 21-23 und dem Mobilfunkgerät 3 über eine Datenverbindung, z.B. einen internen Datenbus oder eine lokale drahtlose Verbindung realisiert wird.

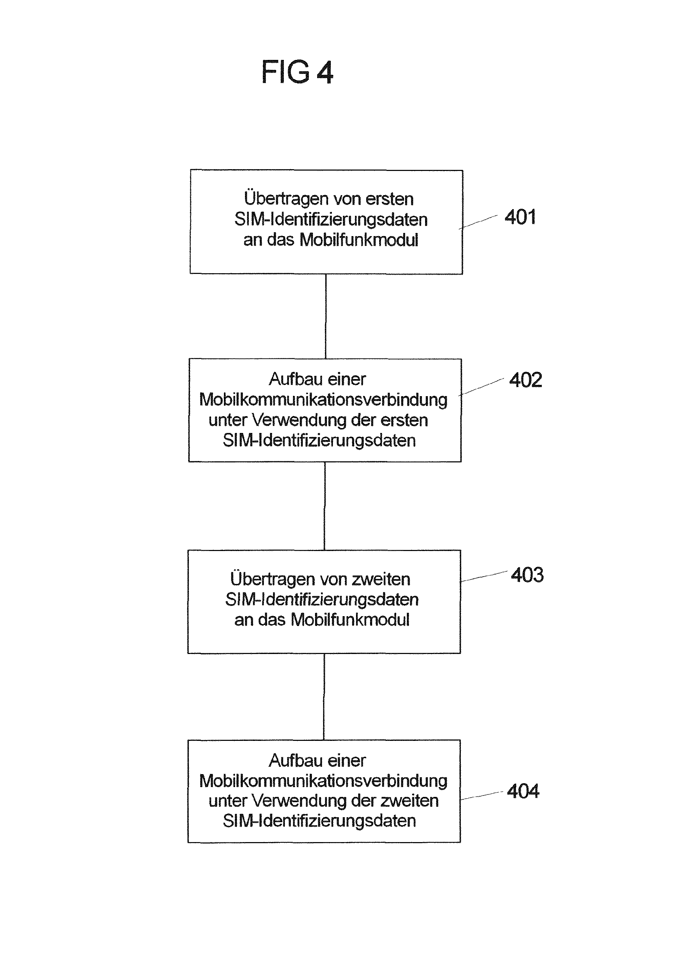

Die Figur 4 verdeutlicht anhand eines Ausführungsbeispiels das beschriebene Verfahren. Zunächst werden erste SIM-Identifizierungsdaten einer ersten der SIM-Karten 210-230 an das Mobilfunkmodul des Mobilfunkgerätes 3 übertragen (Schritt 401). Anschließend erfolgt gemäß Schritt 402 der Aufbau einer Mobilfunkkommunikationsverbindung durch das Mobilfunkgerät 3 unter Verwendung der ersten SIM-Identifizierungsdaten. Über die aufgebaute Mobilkommunikationsverbindung werden nach dem Verbindungsaufbau Nutzdaten übertragen, beispielsweise Telefonie-Daten oder bestimmte von einem Sensor erfasste Daten, die das Mobilfunkmodul des Mobilfunkgerätes 3 von dem TK-Endgerät, das die SIM-Identifizierungsdaten für die Mobilkommunikationsverbindung bereitgestellt hat, erhält oder an dieses übersendet.

Zu einem späteren Zeitpunkt (und nach Abbau der zuvor aufgebauten Mobilkommunikationsverbindung) werden gemäß Schritt 403 zweite SIM-Identifizierungsdaten einer zweiten der SIM-Karten 21-23 in das Mobilfunkmodul des Mobilfunkgerätes 3 übertragen. Gemäß Schritt 404 erfolgt anschließend der Aufbau einer Mobilkommunikationsverbindung unter Verwendung der zweiten SIM-Identifizierungsdaten. Dem Aufbau der Verbindung folgt wiederum eine Nutzdatenübertragung. Hieran können sich Übertragungen weiterer SIM-Identifizierungsdaten an das Mobilfunkmodul und ein entsprechender weiterer Aufbau einer Mobilkommunikationsverbindung anschließen.

Es werden somit sequenziell SIM-Identifizierungsdaten unterschiedlicher SIM-Karten an lediglich ein zentrales Mobilfunkmodul übersandt und mittels dieses Moduls die jeweiligen Kommunikationsverbindungen nacheinander aufgebaut.

Dabei kann es vorteilhaft sein, eine Steuereinheit vorzusehen, die darüber entscheidet, zu welcher der im Kraftfahrzeug 1 angeordneten SIM-Karten 21-23 zu einem betrachteten Zeitpunkt eine Mobilkommunikationsverbindung bereitgestellt werden soll. Eine solche Steuereinheit dient dabei auch dazu, Prioritätskonflikte zu lösen und festzulegen, zu welcher der SIM-Karten 21-23 eine Kommunikationsverbindung über das Mobilfunkmodul aufgebaut wird, wenn mehrere der SIM-Karten 21-23 SIM-Identifizierungsdaten zum Aufbau einer entsprechenden Verbindung an das Mobilfunkmodul senden.

Beispielsweise kann vorgesehen sein, dass von einer "Notruf-SIM" übersandte Daten stets die höchste Priorität besitzen und diese im Falle eines Konfliktes für den Aufbau einer Mobilkommunikationsverbindung benutzt werden bzw., sofern bereits eine andere Mobilkommunikationsverbindung aktuell besteht, diese beendet und unmittelbar im Anschluss darauf eine neue Mobilkommunikationsverbindung mit den SIM-Identifizierungsdaten der Notruf-SIM aufgebaut wird.

Eine solche Steuereinheit kann im Mobilfunkgerät 1 selbst angeordnet oder örtlich getrennt vom Mobilfunkgerät angeordnet sein.

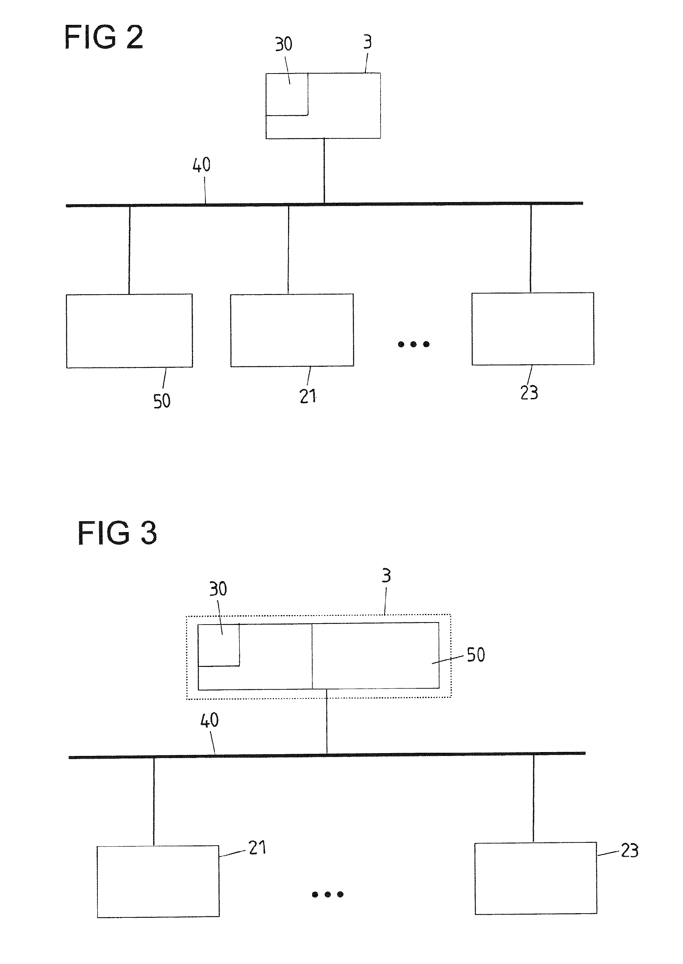

Zwei Funktionsblockschaltbilder, die diese beiden möglichen Anordnungen einer Steuereinheit widerspiegeln, sind in den Figuren 2 und 3 angegeben.

Gemäß der Figur 2 sind an einen lokalen Bus 40 mehrere TK-Endgeräte 21, ein Steuergerät 50 und ein Mobilfunkgerät 3, das ein Mobilfunkmodul 30 aufweist, angeschlossen. Die TK-Endgeräte 21-23 umfassen wie erläutert jeweils ein SIM-Modul mit einer SIM-Karte und einem SIM-Kartenleser. Die Datenübertragung zwischen den genannten Komponenten erfolgt über einen lokalen Datenbus 40, wobei dies nur beispielhaft zu verstehen ist. Die Datenübertragung kann grundsätzlich in beliebiger Weise, beispielsweise auch drahtlos mittels eines WLAN-Standards wie WiFi erfolgen.

Im Ausführungsbeispiel der Figur 2 empfängt sowohl das Mobilfunkgerät 30 als auch das Steuergerät 50 die SIM-Identifizierungsdaten, die die jeweiligen TK-Endgeräte 21-23 aussenden. Das Steuergerät 50 legt fest und sendet einen entsprechenden Steuerbefehl an das Mobilfunkgerät 3 bzw. das Mobilfunkmodul 30, zu welcher der SIM-Karten 21-23 das Mobilfunkgerät 30 eine Kommunikationsverbindung aufbauen soll.

In einer Ausführungsvariante kann alternativ vorgesehen sein, dass die TK-Endgeräte 21-23 die SIM-Identifizierungsdaten zunächst allein an das Steuergerät 50 senden und dieses entscheidet, zu welcher der TK-Endgeräte 21-23 bzw. zu welcher der SIM-Karten eine Mobilfunkverbindung aufgebaut werden soll, und nur die SIM-Identifizierungsdaten der ausgewählten SIM-Karte 21-23 an das Mobilfunkmodul 30 überträgt.

Die Figur 3 zeigt eine Ausführungsvariante, bei der die Steuereinheit 50 in das Mobilfunkgerät 3 integriert ist. Auch bei dieser Architektur können die beiden in Bezug auf die Figur 2 erläuterten Verfahrensvarianten eingesetzt werden, wonach die SIM-Identifizierungsdaten entweder direkt an das Mobilfunkmodul 30 übertragen werden und dieses zusätzliche Steuersignale von der Steuereinheit 50 erhält, oder die SIM-Identifizierungsdaten zunächst nur an das Steuergerät 50 übertragen und von diesen zusammen mit geeigneten Steuerbefehlen an das Mobilfunkmodul 30 übertragen werden.

Die Steuereinheit 50 entscheidet darüber, welcher Dienst aktuell angefordert wird, und generiert entsprechende Steuersignale an das Mobilfunkmodul 30, so dass die entsprechend relevante SIM-Karte 21-23 bzw. deren SIM-Identifizierungsdaten im Mobilfunkmodul 30 eingebucht werden. Beispielsweise werden bei einem durch einen Crashsensor detektierten Unfall die SIM-Identifizierungsdaten einer "Notruf-SIM" an das Mobilfunkmodul 30 übertragen und eingebucht. Nach Verlassen des Fahrzeugs können Wartungsdaten über eine "Wartungs-SIM" an das Mobilfunkmodul 30 übertragen und eingebucht werden. Bei Betrieb des Fahrzeugs können die SIM-Identifizierungsdaten einer SIM-Karte eines Autotelefons eines Fahrzeuginsassen an das Mobilfunkmodul 30 übertragen und eingebucht werden. Die Entscheidung, welche SIM-Karte eingebucht werden soll, kann dabei manuell und/oder automatisch aufgrund bestimmter Parameter erfolgen. Solche Parameter können beispielsweise die Position des Fahrzeugs (beispielsweise bestimmt über GPS), die Zeit sowie bestimmte Betriebsparameter sein.

Gemäß einer weiteren Ausführungsvariante werden mehrere TK-Endgeräte 21-23 bzw. deren SIM-Karten 210-230 gleichzeitig über das eine Mobilfunkmodul 30 jeweils in einem Mobilfunknetz eingebucht. Dabei ist das Mobilfunkmodul 30 dazu ausgebildet, zu SIM-Identifizierungsdaten unterschiedlicher SIM-Karten gleichzeitig unterschiedliche Mobilfunkkanäle aufzubauen und zu unterhalten.

Die Erfindung beschränkt sich in ihrer Ausgestaltung nicht auf die vorstehend dargestellten Ausführungsbeispiele, die lediglich beispielhaft zu verstehen sind. Beispielsweise ist es möglich, in die beschriebene Telekommunikationsanordnung statt in einem Kraftfahrzeug in einer anderen Umgebung bereitzustellen, beispielsweise in einem Flugzeug, in einem Zug oder im Kellergeschoss eines Gebäudes oder einer Industrieanlage.

## Patentansprüche

1. Telekommunikationsanordnung, die aufweist:
- eine Mehrzahl von Telekommunikations (TK)-Endgeräten (21-23), die jeweils eine physische SIM-Karte (210-230) aufweisen, die SIM-Identifizierungsdaten enthält, und
- ein Mobilfunkmodul (30) für eine Mobilkommunikation,
- wobei das Mobilfunkmodul (30) dazu ausgebildet ist, SIM-Identifizierungsdaten der SIM-Karten (210-230) der Mehrzahl der TK-Endgeräte (21-23) zu erhalten und jeweils zum Aufbau einer Mobilkommunikationsverbindung zu nutzen, wobei durch das Bereitstellen der SIM-Identifizierungsdaten einer SIM-Karte (210-230) jeweils eine Nutzung des Mobilfunkmoduls (30) für die Mobilkommunikation ermöglicht wird, und
- wobei die Telekommunikationsanordnung dazu ausgebildet ist, dass nach Aufbau einer Mobilkommunikationsverbindung Nutzdaten von/zu dem TK-Endgerät (21-23), das die SIM-Identifizierungsdaten für die Mobilkommunikationsverbindung bereitgestellt hat, übertragen werden, wozu das TK-Endgerät (21-23) über eine lokale Datenverbindung (40) mit dem Mobilfunkmodul (30) kommuniziert.

2. Telekommunikationsanordnung nach Anspruch 1, **dadurch gekennzeichnet, dass** die Telekommunikationsanordnung des Weiteren eine Steuereinheit (50) umfasst, die dazu ausgebildet ist festzulegen, zu welcher der SIM-Karten (210-230) der Telekommunikationsanordnung das Mobilfunkmodul (30) zu einem betrachteten Zeitpunkt eine Mobilkommunikationsverbindung aufbaut oder aufrecht erhält.

3. Telekommunikationsanordnung nach Anspruch 2, **dadurch gekennzeichnet, dass** die Telekommunikationsanordnung derart ausgebildet ist, dass die SIM-Identifizierungsdaten der SIM-Karten (210-230) zunächst an die Steuereinheit (50) übertragen werden und die Steuereinheit (50) die SIM-Identifizierungsdaten einer der SIM-Karten an das Mobilfunkmodul (30) zwecks Aufbau einer Mobilkommunikationsverbindung überträgt.

4. Telekommunikationsanordnung nach Anspruch 2, **dadurch gekennzeichnet, dass** die Telekommunikationsanordnung derart ausgebildet ist, dass die SIM-Identifizierungsdaten der SIM-Karten (210-230) direkt an das Mobilfunkmodul (30) übertragen werden und die Steuereinheit (50) ein Steuersignal an das Mobilfunkmodul (30) überträgt, mit welcher der SIM-Identifizierungsdaten das Mobilfunkmodul (30) eine Mobilkommunikationsverbindung aufbauen soll.

5. Telekommunikationsanordnung nach einem der Ansprüche 2 bis 4, **dadurch gekennzeichnet, dass** die Telekommunikationsanordnung derart ausgebildet ist, dass die SIM-Identifizierungsdaten an die Steuereinheit (50) und/oder an das Mobilfunkmodul (30) über eine lokale Datenverbindung (40) übertragen werden.

6. Telekommunikationsanordnung nach einem der Ansprüche 2 bis 5, **dadurch gekennzeichnet, dass** die TK-Endgeräte (21-23), die Steuereinheit (50) und das Mobilfunkmodul (30) an ein lokales Netz angeschlossen sind.

7. Telekommunikationsanordnung nach einem der vorangehenden Ansprüche, **dadurch gekennzeichnet, dass** mindestens eines der TK-Endgeräte (21-23) dazu ausgebildet ist, nach Aufbau einer Mobilkommunikationsverbindung von einem Sensor erhaltene Daten über die Mobilkommunikationsverbindung zu übertragen.

8. Telekommunikationsanordnung nach einem der vorangehenden Ansprüche, **dadurch gekennzeichnet, dass** mindestens eines der TK-Endgeräte (21-23) einen Telefonie-Dienst und/oder einen Datendienst bereitstellt.

9. Telekommunikationsanordnung nach einem der vorangehenden Ansprüche, **dadurch gekennzeichnet, dass** die Mehrzahl von TK-Endgeräten (21-23) in einem Fahrzeug angeordnet oder anordbar und das Mobilfunkmodul (30) in dem Fahrzeug (1) installiert ist.

10. Telekommunikationsanordnung nach Anspruch 9, **dadurch gekennzeichnet, dass** mindestens eine der SIM-Karten (210-230) eine "Notruf-SIM-Karte" ist, mit deren SIM-Identifizierungsdaten im Falle eines Unfalls eines Fahrzeugs eine Mobilfunkverbindung automatisch aufgebaut wird, und/oder mindestens eine der SIM-Karten (210-230) eine "Wartungs-SIM-Karte" ist, mit deren SIM-Identifizierungsdaten während oder nach Beendigung des Fahrbetriebs eine Mobilfunkverbindung automatisch aufgebaut wird.

11. Telekommunikationsanordnung nach Anspruch 9 oder 10, **dadurch gekennzeichnet, dass** mindestens eine der SIM-Karten (210-230) eine SIM-Karte eines Autotelefons ist, mit deren SIM-Identifizierungsdaten eine Mobilfunkverbindung aufgebaut wird, wenn der Fahrer über das Autotelefon einen Telefondienst oder einen Datendienst nutzen will.

12. Telekommunikationsanordnung nach einem der vorangehenden Ansprüche, **dadurch gekennzeichnet, dass** das Mobilfunkmodul (30) dazu ausgebildet ist, auf der Basis der SIM-Identifizierungsdaten mehrerer SIM-Karten (210-230) gleichzeitig mehrere Mobilkommunikationsverbindungen aufzubauen.

13. Telekommunikationsanordnung nach einem der vorangehenden Ansprüche, **dadurch gekennzeichnet, dass** genau ein Mobilfunkmodul für eine Mobilkommunikation vorgesehen ist, und dieses Mobilfunkmodul physisch keine SIM-Karte enthält.

14. Fahrzeug mit einer Telekommunikationsanordnung gemäß Anspruch 1.

15. Verfahren für die Mobilfunkkommunikation, insbesondere für den Betrieb einer Telekommunikationsanordnung nach Anspruch 1, mit folgenden Schritten:
- Bereitstellen von mindestens zwei TK-Endgeräten (21-23), die jeweils eine physische SIM-Karte (210-230) besitzen, die SIM-Identifizierungsdaten enthält,
- Bereitstellen eines zentralen Mobilfunkmoduls (30) für die Mobilkommunikation,
- Übertragen von ersten SIM-Identifizierungsdaten einer ersten der SIM-Karten (210-230) an das Mobilfunkmodul (30) und Aufbau einer Mobilkommunikationsverbindung unter Verwendung der ersten SIM-Identifizierungsdaten, wobei nach Aufbau der Mobilkommunikationsverbindung Nutzdaten zwischen dem Mobilfunkmodul (30) und dem TK-Endgerät (21-23), das die erste SIM-Karte besitzt, über eine lokale Datenverbindung (40) übertragen werden;
- Übertragen von zweiten SIM-Identifizierungsdaten einer zweiten der SIM-Karten (210-230) an das Mobilfunkmodul (30) und Aufbau einer Mobilkommunikationsverbindung unter Verwendung der zweiten SIM-Identifizierungsdaten, wobei nach Aufbau der Mobilkommunikationsverbindung Nutzdaten zwischen dem Mobilfunkmodul (30) und dem TK-Endgerät (21-23), das die zweite SIM-Karte besitzt, über eine lokale Datenverbindung (40) übertragen werden.
